# DEMANDE DE BREVET EUROPEEN

(11) **EP 1 557 961 A1**
(43) Date de publication de la demande: **27.07.2005**
(21) Numéro de dépôt: 05354006.8
(22) Date de dépôt: 18.01.2005
(51) Int. Cl.: H04B 5/00, G01C 21/20

(54) **Dispositif et procédé de guidage dynamique par radiofréquence**

(30) Priorité: 20.01.2004 FR 0400476
(71) Demandeur: APDISAR Association pour la Promotion et le Développement de l'Ecole d'Ingénieurs ESISAR, 26000 Valence (FR)
(72) Inventeur: Medina, Christophe, 34725 Saint Andre de Sangonis (FR); Marcel, Philippe, 26000 Valence (FR); Flory, Alexandre, 15130 Ytral (FR)
(74) Mandataire: Jouvray, Marie-Andrée

(57) **Abrégé**

Le dispositif de guidage comporte des étiquettes radiofréquence (2), munies chacune d'un code d'identification individuel (ID) et disposées sous forme d'un réseau bidimensionnel sur le sol. Pour permettre son guidage, un utilisateur est muni d'un lecteur pouvant communiquer, par radiofréquence, avec les étiquettes (2). Le lecteur comporte en mémoire des codes de chemin (C1 à C5, ...) correspondant aux destinations pouvant être sélectionnées par l'utilisateur. Les étiquettes radiofréquence (2) sont des étiquettes intelligentes comportant chacune en mémoire la correspondance entre les codes de chemin et les directions à suivre à partir de l'emplacement de l'étiquette. Le lecteur détermine et signale la direction à prendre en fonction de signaux fournis par l'étiquette la plus proche et représentatifs de la direction associée au code de chemin correspondant à la destination présélectionnée. L'enregistrement d'un historique du déplacement par le lecteur permet à celui-ci de corriger la direction à prendre si l'utilisateur s'écarte du chemin.

## Description

### Domaine technique de l'invention

L'invention concerne un dispositif de guidage sans contact d'un utilisateur dans un lieu prédéterminé, comportant une pluralité d'étiquettes réparties dans le lieu et munies chacune d'un code d'identification individuel. L'utilisateur est muni d'un lecteur comportant une unité de traitement électronique connectée à des moyens d'émission et de réception radiofréquence, à des moyens de mémorisation d'un chemin à prendre pour atteindre une destination présélectionnée et à une interface homme-machine comportant des moyens de signalisation de la direction à prendre pour atteindre ladite destination.

L'invention concerne également un procédé de guidage d'un utilisateur au moyen d'un tel dispositif.

### État de la technique

La technique du filoguidage est parfois utilisée pour guider automatiquement des véhicules, par exemple des chariots de manutention le long d'une trajectoire prédéterminée. Le chariot suit un fil enterré dont la présence est en permanence détectée par l'intermédiaire de capteurs inductifs ou par radiofréquence. Un filoguidage peut également être réalisé avec des capteurs optiques associés à des lignes visibles matérialisées sur le sol, par exemple sous forme de lignes peintes. Ce type de guidage devient complexe quand des aiguillages sont nécessaires et le nombre de chariots pouvant être radioguidés est limité.

Par ailleurs, le document EP-A-1124110 décrit un dispositif de guidage, notamment pour personnes handicapées, dans un immeuble ou un espace public. Des éléments passifs d'identification, disposés à un certain nombre d'emplacements ou noeuds répartis dans ce lieu, communiquent par couplage inductif, optique, magnétique ou électromagnétique, avec un navigateur, programmable par une carte intelligente de destination et porté par l'utilisateur. À chaque noeud, l'élément passif d'identification du noeud fournit au navigateur un code d'identification correspondant à la localisation du noeud et le navigateur détermine et signale le prochain noeud à atteindre pour parvenir à la destination finale en suivant un trajet optimal. Ce dispositif implique que l'utilisateur dispose d'une carte des emplacements des noeuds pour aller de l'un à l'autre en suivant les indications de son navigateur. De plus, une défaillance d'un élément d'identification provoque la perte du chemin à suivre.

### Objet de l'invention

L'invention a pour but un dispositif et un procédé de guidage ne présentant pas ces inconvénients et, en particulier, un dispositif et un procédé permettant de guider facilement un utilisateur entrant dans un lieu prédéterminé, par exemple dans un centre commercial ou dans un établissement public.

Selon l'invention, ce but est atteint par un dispositif et un procédé selon les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre schématiquement un lieu équipé d'un dispositif de guidage selon l'invention.
La figure 2 représente schématiquement une étiquette radiofréquence pouvant être utilisée dans le dispositif de guidage selon l'invention.
La figure 3 représente schématiquement un serveur dans lequel un programme de guidage est mémorisé.
La figure 4 illustre schématiquement un lecteur dont est muni un utilisateur dans un dispositif de guidage selon l'invention.

### Description de modes particuliers de réalisation.

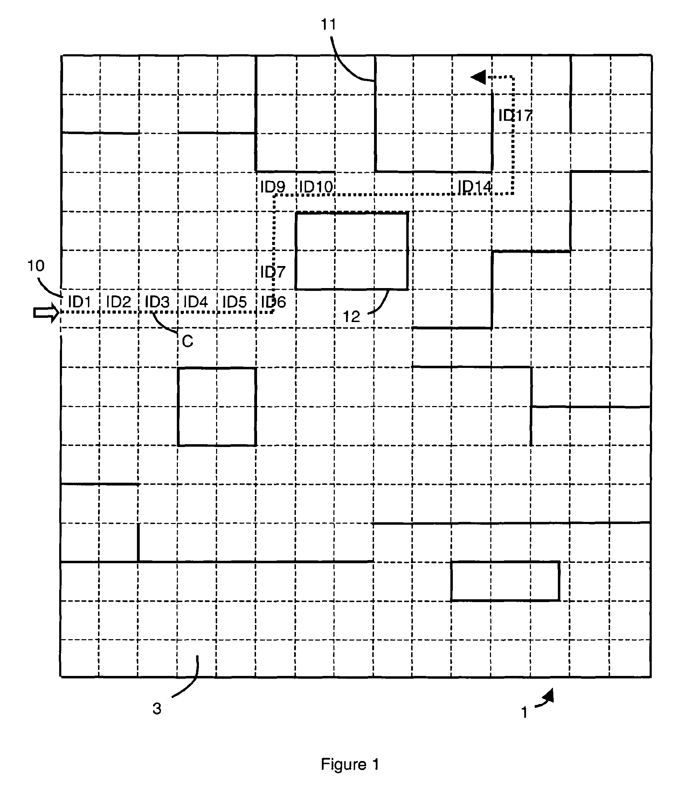

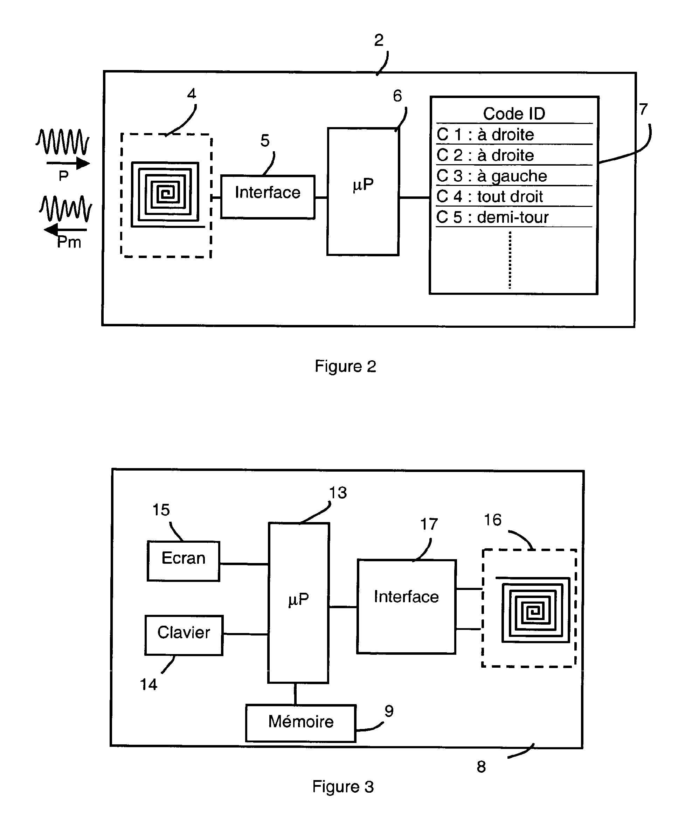

Un lieu 1 dans lequel un utilisateur doit être guidé est schématisé à la figure 1. Un tel lieu peut, par exemple, être un centre commercial, un établissement public, une usine, etc. Des étiquettes radiofréquence 2 intelligentes (figure 2), munies chacune d'un code d'identification individuel ID, sont disposées sous forme d'un réseau bidimensionnel sur le sol, de préférence sous un revêtement de sol. Les étiquettes sont ainsi protégées. Dans un mode de réalisation préférentiel, le revêtement de sol est constitué par un carrelage, une étiquette étant disposée sous chacun des carreaux 3 du carrelage.

Comme représenté à la figure 2, chaque étiquette 2 peut être constituée par une étiquette radiofréquence intelligente standard (RFID), comportant une antenne 4 accordée sur une fréquence prédéterminée et connectée par une interface 5 à une unité de traitement électronique 6, de préférence à microprocesseur. L'unité de traitement électronique 6 est connectée à une mémoire 7. Chaque étiquette 2 contient dans sa mémoire 7 le code d'identification individuel ID correspondant ainsi que la correspondance entre différents codes de chemin (C1 à C5, ...) et les directions correspondantes (à droite, à gauche, tout droit, demi-tour) à suivre à partir de l'emplacement de l'étiquette. De manière connue, un signal de porteuse P reçu par l'étiquette 2 sert simultanément de signal d'interrogation et d'alimentation en énergie de l'étiquette. Celle-ci renvoie alors un signal de porteuse Pm modulé, en fréquence, en phase ou en amplitude, par le contenu de sa mémoire 7, c'est-à-dire au moins par son code d'identification individuel et par la direction associée à l'un des chemins, correspondant à une destination présélectionnée par l'utilisateur.

Un programme de guidage, associant un code de chemin C à chaque destination accessible du lieu, est mis en mémoire dans un serveur 8, illustré schématiquement à la figure 3. Le programme de guidage mémorisé dans une mémoire 9 du serveur 7 tient compte de la disposition des différents emplacements présents sur le lieu, par exemple de la disposition des bureaux, de leurs entrées et de différents obstacles présents sur le lieu. À titre d'exemple, un chemin, de code de chemin C, pouvant être suivi par un utilisateur pour aller d'une entrée 10 du lieu à l'entrée d'un bureau 11, en contournant un obstacle 12, est représenté en pointillé sur la figure 1. Ce chemin C passe successivement par les étiquettes de code d'identification ID1 à ID19.

Le serveur 8 peut comporter une unité de traitement électronique 13, de préférence à microprocesseur, connectée à la mémoire 9 et à une interface homme-machine, par exemple sous la forme d'un clavier 14 et d'un écran de visualisation 15, permettant de mettre en mémoire et de visualiser un programme de guidage permettant d'atteindre les différentes destinations possibles du lieu. La transmission, par radiofréquence, du programme de guidage peut être assurée par une étiquette radiofréquence d'initialisation 16, connectée, par une interface appropriée 17, à l'unité de traitement électronique 13. Une étiquette radiofréquence d'initialisation 16 est, de préférence, disposée à chaque entrée 10 du lieu 1. Elle peut être intégrée dans le serveur 8 ou disposée à l'extérieur de celui-ci.

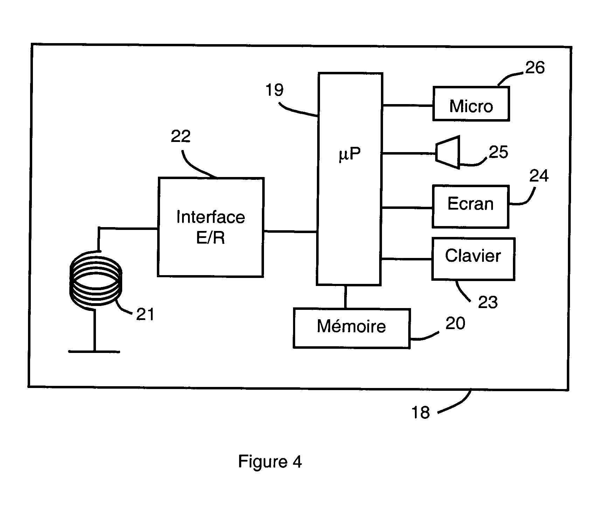

Pour permettre son guidage, un utilisateur doit être muni d'un lecteur 18 pouvant communiquer, par radiofréquence, à la fois avec le serveur 8, par l'intermédiaire de l'étiquette radiofréquence d'initialisation 16, et avec les étiquettes 2 disposées sur le sol. Comme représenté à la figure 4, le lecteur 18 comporte une unité de traitement électronique 19, de préférence à microprocesseur, connectée à une mémoire 20, à une antenne 21 par l'intermédiaire d'une interface d'émission-réception (E/R) 22, ainsi qu'à une interface homme-machine. L'interface homme-machine du lecteur 18 peut comporter un clavier 23, un écran de visualisation 24 et/ou une interface vocale, par exemple sous la forme d'un haut-parleur 25 et/ou d'un micro 26.

Lorsqu'un utilisateur, muni d'un lecteur 18, arrive sur le lieu 1, son lecteur est automatiquement initialisé, c'est-à-dire qu'il reçoit le programme de guidage correspondant au lieu, en provenance du serveur 8, par l'intermédiaire de l'étiquette radiofréquence d'initialisation 16 et de l'antenne 21 du lecteur. Le serveur 8 peut émettre le programme de guidage en continu ou uniquement lorsqu'un lecteur 18 passe à proximité d'une étiquette radiofréquence d'initialisation 16, à l'une des entrées 10 du lieu 1. Ainsi, le programme de guidage approprié, associant un code de chemin C à chaque destination accessible du lieu, est mis en mémoire dans le lecteur 18 lors de l'entrée de l'utilisateur dans le lieu.

Après initialisation, le lecteur 18 affiche sur l'écran 24 et/ou diffuse par le haut-parleur 25 un menu comportant l'ensemble des destinations accessibles dans le lieu 1, par exemple le numéro d'un bureau, le nom d'un magasin, etc. L'utilisateur sélectionne alors dans ce menu, par l'intermédiaire du clavier 23 ou vocalement par l'intermédiaire du micro 26, la destination qu'il désire atteindre.

Le lecteur 18, qui émet le signal de porteuse P, reçoit et analyse les signaux émis par l'étiquette la plus proche 2. L'unité de traitement 19 du lecteur 18 détermine la direction à prendre en fonction des signaux fournis par l'étiquette la plus proche et représentatifs de la direction associée au code de chemin C correspondant à la destination présélectionnée. Il signale alors la direction à suivre à l'utilisateur. Cette signalisation (par exemple : tout droit, à gauche, à droite, demi-tour, tout droit, etc.) peut être réalisée sous forme d'une indication écrite, sur l'écran 24, et/ou sous forme d'une indication orale, par l'intermédiaire du haut-parleur 25. La signalisation peut éventuellement être complétée et/ou remplacée par un graphique représentant le lieu, comme sur la figure 1, et indiquant, par exemple, le trajet déjà parcouru en gras, le trajet à parcourir en pointillé (ou en une couleur différente) et la position de l'utilisateur. Celle-ci peut être représentée par l'extrémité de départ d'une flèche indiquant clairement la direction à prendre.

À titre d'exemple, si la direction sélectionnée par l'utilisateur est associée au chemin C3 dans le programme de guidage mis en mémoire dans le lecteur 18, et si la direction correspondante fournie par l'étiquette la plus proche est, comme représenté à la figure 2, "à gauche", cette direction est signalée à l'utilisateur par affichage sur son écran 24 et/ou par l'intermédiaire du haut-parleur 25.

La densité du réseau d'étiquettes est telle que l'absence ou la défaillance d'une étiquette n'a pas d'influence négative sur le fonctionnement du dispositif. En effet, le lecteur 18 reçoit en permanence des informations de l'étiquette la plus proche et les informations fournies par les différentes étiquettes sont indépendantes de celles qui sont fournies par les étiquettes environnantes. La direction à prendre signalée est ainsi mise à jour en permanence et rapidement lors du déplacement de l'utilisateur.

La transmission de données entre le lecteur et les étiquettes 2 est, de préférence, suffisamment rapide pour permettre successivement la lecture de tout le contenu de la mémoire 7 de chaque étiquette au cours du déplacement de l'utilisateur. Dans ce cas, l'unité de traitement électronique 19 du lecteur 18 compare en permanence le code de chemin (C3 dans l'exemple ci-dessus) correspondant à la destination sélectionnée et mis en mémoire dans le lecteur aux derniers codes de chemin reçus (donc en provenance de l'étiquette la plus proche) et considère que la direction à prendre est celle qui est associée au dernier code de chemin reçu identique au code de chemin mémorisé dans le lecteur.

En variante, le lecteur peut fournir aux étiquettes le code de chemin recherché (C3 dans l'exemple ci-dessus) et les étiquettes ne fournissent alors que la direction correspondant à ce code de chemin particulier.

Le fonctionnement ci-dessus suppose que l'utilisateur suit depuis l'entrée 10 le chemin indiqué. Or, dans certains cas, l'utilisateur peut changer de direction sans tenir compte des indications fournies par le lecteur 18. Pour que le lecteur puisse néanmoins lui fournir des indications correctes lui permettant d'atteindre la destination sélectionnée, l'unité de traitement 19 du lecteur 18 met en mémoire un historique du déplacement de l'utilisateur en fonction des codes d'identification (ID) individuels reçus successivement des étiquettes 2 et comporte des moyens de correction de la direction à prendre en fonction de cet historique.

À titre d'exemple, l'utilisateur suivant le chemin C de la figure 1, peut revenir en arrière après avoir atteint l'étiquette de code d'identification ID4, au lieu de continuer tout droit vers l'étiquette de code d'identification ID5. Le lecteur recevant alors les signaux en provenance de l'étiquette de code d'identification ID3, l'historique enregistré par le lecteur comporte alors successivement les codes d'identification ID1, ID2, ID3, ID4 et ID3. Le lecteur effectue donc une correction tenant compte de cet historique. Ainsi, tandis que la direction associée au chemin C, mémorisée dans l'étiquette de code d'identification ID3 et fournie au lecteur lors de son passage est "tout droit", le lecteur la corrige en "demi-tour" pour tenir compte du fait que l'utilisateur ne vient pas de l'étiquette de code ID2, mais de l'étiquette de code d'identification ID4. La direction fournie par une étiquette peut ainsi être systématiquement corrigée par le lecteur si l'utilisateur ne vient pas de l'étiquette qui la précède normalement dans le chemin correspondant à la destination à suivre. De manière analogue, si l'utilisateur s'écarte du chemin à suivre et passe sur une étiquette n'appartenant pas à ce chemin, le lecteur peut ramèner l'utilisateur sur une étiquette de ce chemin, par exemple, sur la dernière étiquette du chemin sur laquelle est passé l'utilisateur.

L'utilisateur peut à tout instant sélectionner une nouvelle destination à partir du menu. Le lecteur 18 signale alors la nouvelle direction à emprunter. Dans un mode de réalisation préférentiel le chemin tient alors compte de l'emplacement de l'utilisateur lors de cette sélection, c'est-à-dire que le chemin sélectionné passe par l'emplacement sur lequel se trouve alors l'utilisateur.

Le programme de guidage est systématiquement mis à jour dans le serveur 8 lors d'une modification d'un emplacement dans le lieu. Ceci est notamment le cas, dans un centre commercial, chaque fois qu'un stand mobile est mis en place, même temporairement. Les étiquettes peuvent alors être reprogrammées, si nécessaire, par exemple au moyen d'un dispositif de programmation (non représenté), qui peut être du même type que le lecteur 18

Le dispositif de guidage ci-dessus est plus particulièrement adapté au guidage d'un fauteuil roulant d'une personne handicapée et/ou au guidage d'une personne non-voyante, dont il permet une localisation précise et dynamique. Dans le cas d'une personne non-voyante, le lecteur 18, muni d'une interface vocale, peut être intégré dans une canne, qui devient ainsi une canne intelligente. Ce dispositif de guidage peut également être utilisé pour le guidage de mobiles ou de chariots industriels autonomes, destinés à convoyer des objets d'un point à un autre en milieu industriel.

L'invention n'est pas limitée au mode particulier de réalisation décrit ci-dessus. En particulier, l'utilisateur peut être guidé, comme décrit ci-dessus, par un pré-chargement des différentes directions possibles et/ou par un téléchargement par une liaison sans fil en cours de déplacement.

## Revendications

1. Dispositif de guidage sans contact d'un utilisateur dans un lieu prédéterminé, comportant une pluralité d'étiquettes (2) réparties dans le lieu et munies chacune d'un code d'identification individuel (ID), l'utilisateur étant muni d'un lecteur (18) comportant une unité de traitement électronique (19) connectée à des moyens (21, 22) d'émission et de réception radiofréquence, à des moyens de mémorisation (20) d'un chemin à prendre pour atteindre une destination présélectionnée et à une interface homme-machine comportant des moyens (24, 25) de signalisation de la direction à prendre pour atteindre ladite destination, dispositif **caractérisé en ce que** le chemin à prendre étant mémorisé dans le lecteur (18) sous forme d'un code de chemin (C), les étiquettes (2) sont des étiquettes radiofréquence intelligentes, disposées sous forme d'un réseau bidimensionnel sur le sol dudit lieu et comportant chacune en mémoire la correspondance entre différents codes de chemin (C1 à C5) et les directions correspondantes à suivre à partir de l'emplacement de ladite étiquette, l'unité de traitement électronique (19) du lecteur (18) comportant des moyens pour déterminer la direction à prendre en fonction de signaux fournis par l'étiquette la plus proche et représentatifs de la direction associée au code de chemin correspondant à la destination présélectionnée.

2. Dispositif selon la revendication 1, **caractérisé en ce que**, les signaux fournis par chaque étiquette (2) étant également représentatifs du code d'identification individuel (ID) de ladite étiquette, l'unité de traitement (19) du lecteur (18) met en mémoire un historique du déplacement de l'utilisateur, en fonction des codes d'identification individuels reçus successivement, et comporte des moyens de correction de la direction à prendre en fonction de l'historique.

3. Dispositif selon l'une des revendications 1 et 2, **caractérisé en ce qu'**il comporte des moyens d'initialisation du lecteur (18), disposés à au moins une entrée (10) du lieu (1) et comportant des moyens (16) de transmission radiofréquence d'un programme de guidage, connectés à une unité de traitement (13) d'un serveur (8), ledit programme de guidage associant un code de chemin (C) à chaque destination accessible dans le lieu.

4. Dispositif selon la revendication 3, **caractérisé en ce que** les moyens d'initialisation comportent une étiquette radiofréquence d'initialisation (16) disposée à une entrée (10) du lieu (1).

5. Dispositif selon l'une quelconque des revendications 1 à 4, **caractérisé en ce que** l'interface homme-machine du lecteur (18) comporte des moyens (23, 26) de sélection d'une destination, par l'utilisateur,

6. Dispositif selon l'une quelconque des revendications 1 à 5, **caractérisé en ce que** l'interface homme-machine du lecteur (18) comporte une interface vocale (25, 26).

7. Dispositif selon l'une quelconque des revendications 1 à 6, **caractérisé en ce que** les étiquettes (2) sont disposées sous un revêtement de sol.

8. Dispositif selon la revendication 7, **caractérisé en ce que** le revêtement de sol est constitué par un carrelage formé d'une pluralité de carreaux (3), une étiquette (2) étant disposée sous chaque carreau (3).

9. Procédé de guidage d'un utilisateur sur un lieu (1) au moyen d'un dispositif selon l'une quelconque des revendications 1 à 8, procédé **caractérisé en ce qu'**il comporte l'initialisation automatique du lecteur (18) porté par l'utilisateur lors de l'entrée de l'utilisateur sur le lieu, la sélection d'une destination par l'utilisateur, provoquant la mise en mémoire dans le lecteur (18) d'un code (C) de chemin à prendre, la détermination et la signalisation par le lecteur (18) de la direction à prendre pour atteindre cette destination en fonction de signaux fournis, par radiofréquence, par l'étiquette (2) la plus proche et représentatifs de la direction associée audit code de chemin.
